# FASCICULE DE BREVET EUROPEEN

(11) **EP 2 370 940 B1**
(45) Date de publication et mention de la délivrance du brevet: **22.06.2022**
(21) Numéro de dépôt: 09760532.3
(22) Date de dépôt: 30.11.2009
(51) Int. Cl.: G06Q 20/12, G06Q 20/34, G06Q 20/40, G06K 19/07, G06K 19/077, G07F 7/08, G07F 7/10

(54) **OBJET PORTABLE COMPORTANT UN AFFICHEUR ET APPLICATION À LA RÉALISATION DE TRANSACTIONS ÉLECTRONIQUES**
PORTABLE OBJECT COMPRISING A DISPLAY AND APPLICATION PERFORMING ELECTRONIC TRANSACTIONS
Tragbarer Gegenstand mit Display und Anwendung zum Durchführen von elektronischen Transaktionen

(30) Priorité: 28.11.2008 EP 08170309
(43) Date de publication de la demande: 05.10.2011
(73) Titulaire: Thales Dis France SAS, 92190 Meudon (FR)
(72) Inventeur: BOUCHER, Daniel, Saint-Laurent, Quebec H4N 3M7 (CA)
(74) Mandataire: Milharo, Emilien
(86) Numéro de dépôt international: PCT/EP2009/066034
(87) Numéro de publication internationale: WO 2010/061002

(56) Documents cités:
- EP-A- 0 980 053
- EP-B1- 0 649 547
- US-A1- 2006 131 393
- US-A1- 2006 196 931
- US-A1- 2007 027 804

## Description

L'invention concerne un objet portable comportant un afficheur, son utilisation pour mettre en œuvre des étapes d'un procédé de transaction électronique et le système associé.

En particulier, l'invention s'applique à la réalisation de transactions électroniques sécurisées telles que des paiements à l'aide d'un objet sécurisé portable tel qu'une carte à puce, clé USB, etc. Les paiements peuvent être en local à l'aide de terminaux de paiement ou en ligne sur internet en relation avec des sites et serveurs marchands ou unité de traitement associée distante ou locale. L'objet se présente sous la forme d'une carte à puce dans un mode de réalisation préféré.

Bien que décrit en relation avec un exemple de transaction financière, le terme transaction désigne ici tout échange bidirectionnel entre l'objet portable et une unité de traitement, par exemple une consultation de base de données, de base personnelle sécurisée, un accès à des fichiers partagés, un téléchargement, un contrôle d'accès, des traitements de données de type monétaire comme les transferts de fonds....

De tels objets portables sont connus parmi les cartes à puce pour afficher notamment des soldes de transactions, le contenu d'une mémoire, un numéro OTP (one time pass word en terminologie anglo-saxonne). De telles cartes peuvent être autonomes et avoir une batterie et un bouton pour actionner la génération de l'OTP. Certaines cartes contiennent un afficheur du type OLED pour présenter des informations alphanumériques.

On connait aussi des étiquettes électroniques pour supermarché ou étalage comportant un afficheur et ayant une interface capable de recevoir des informations particulièrement de prix et de mise à jour par communication radiofréquence avec une unité centrale de chargement de données.

On connait aussi des appareils portables communicants tels que des dispositifs assistants personnels & téléphones (PDA Phone) comportant des afficheurs sensitifs tel que "iPhone" de la société Apple.

On connait aussi les terminaux bancaires lecteur de carte à puce et à bande magnétique capables d'effectuer une transaction électronique. De tels terminaux sont susceptibles de présenter des chevaux de Troie et ne présentent pas une garantie et sécurité suffisante pour un utilisateur.

Pour sécuriser les transactions, on a recours à des transactions en ligne conforme au standard EMV (ex:Mastercard EMV-CAP). Actuellement, il existe trois modèles d'authentification de domaine (3-D sécurisé par Visa, secureCode par Mastercard, ou J/secure par JCB International).

Toutefois, les transactions en ligne sont plus complexes que les transactions en magasins car il faut saisir plus de données.

Le document EP0980053-A divulgue une carte qui peut être utilisée de façon autonome pour effectuer des transactions financières.

Le document US2007/027804-A1 présente un appareil de gestion bancaire à distance pour le transfert d'argent ou de valeur en espèces entre deux parties/

Le document US2006/131393-A1 présente des cartes de transaction, des systèmes de cartes de transaction et des procédés pour les faire fonctionner.

Le document EP0649547-B1 divulgue une carte ayant une structure permettant la communication entre un ordinateur et l'extérieur.

Le document US2006/196931-A1 présente une méthode de création d'un canal sécurisé sur lequel les données de personnalisation de carte de crédit peuvent être transmises par voie aérienne.

L'invention a pour objectif de résoudre les inconvénients précités.

La présente invention propose dans son principe un objet portable dont la structure permet de rendre plus difficile de telles fraudes dans les transactions avec des terminaux de paiement ainsi qu'un nouveau schéma de transaction utilisant cet objet portable.

Selon l'invention, l'objet portable comporte un écran interactif apte à afficher une partie au moins des données utiles à la transaction. Ainsi, les données saisies par l'utilisateur peuvent être envoyées directement de l'objet portable de confiance à une unité de traitement de confiance, notamment à un organisme émetteur de l'objet ou l'accréditant. De même, les données émises
de l'unité de traitement de confiance peuvent être reçues directement par l'objet portable et présentées avec confiance sous le contrôle de l'objet.

A cet effet, l'invention concerne objet portable intelligent tel que défini par le jeu de revendications.

Les données tapées par l'utilisateur sur l'écran sont reçues ou décodées par un contrôleur graphique sécurisé et/ou une puce comprenant un contrôleur sécurisé et/ou mettant en oeuvre des opérations de sécurité.

Ainsi, l'afficheur interactif, par exemple sensitif au toucher, permet de réaliser la transaction directement entre la carte à puce et une unité de traitement, en rendant plus difficile des attaques frauduleuses et améliorant ainsi la sécurité. Le cas échéant, un protocole de communication sécurisé, notamment chiffré peut être partagé entre le processeur de l'objet et l'unité de traitement.

L'utilisateur peut ainsi dialoguer avec son objet portable en toute confiance directement. L'objet a l'avantage d'économiser un clavier ou autre interface homme machine et offre une surface utile d'affichage plus grande ou permet de rendre l'objet plus petit par exemple au format Mini UICC ou mini SIM tout en incorporant une interface homme machine IHM.

Dans le cas d'une carte, l'usage d'un lecteur de type transparent du demandeur, illustré sur les figures ou un lecteur radiofréquence ne couvrant pas la carte ou l'objet, permet de rendre visible et accessible la surface de l'objet ou se trouve l'écran interactif.

L'interactivité peut être obtenue par exemple par des capteurs de pression ou autre, capacitifs, résistifs, magnétiques placés derrière ou combinés à un écran souple.

Selon d'autres caractéristiques, l'objet portable comprend seul ou de manière combinée:
- une interface de communication avec un terminal, celle-ci pouvant être une interface de toute nature à contact ou radiofréquence, voire même par exemple de simples connecteurs électriques pour une connexion de type ohmique avec un port de terminal;
- des moyens de communication aptes à établir une communication avec une unité de traitement distante et/ou afficher des informations provenant de l'unité de traitement distante;
- L'objet portable est apte à faire transiter les données saisies sur l'écran à l'unité distante;
- Il est apte à interagir directement via l'écran avec un utilisateur;
- Il comprend un programme ou protocole permettant d'afficher des données d'une transaction en provenance de l'unité distante pour approbation et/ ou contrôle par interaction sur une zone affiché sur l'écran;
- Il comprend un programme ou protocole permettant d'afficher au moins un mode de paiement et de transmettre un mode sélectionné par interaction sur une zone affichée sur l'écran;
- Il comprend un programme permettant d'afficher au moins un clavier interactif de saisie d'un code PIN et de transmettre pour vérification le code PIN sélectionné par interaction avec les zones affichées sur l'écran;
- Il comprend un programme capable d'afficher au moins une zone d'écriture et de transmettre pour vérification des paramètres de saisie de récriture par interaction avec l'écran.

L'invention a également pour objet un procédé et système correspondant tels que définis par le jeu de revendications.

Grâce à l'invention, les terminaux bancaires peuvent être remplacés par tout lecteur de carte classique car la transaction a lieu directement entre la carte à puce et l'organisme bancaire émetteur de la carte. A la limite le lecteur peut être un simple connecteur sans électronique ou sans effectuer une interface logicielle.

Elle permet également la convergence de tous les systèmes de paiement via internet que les achats / transactions soient effectués en magasin ou en ligne via internet une fois que le marchand a obtenu les données d'identification de son institution financière ou portail de paiement sécurisé. En outre, le procédé basé sur un modèle de transaction basé sur internet permet d'éviter des frais de communication téléphonique.

Grâce au lecteur de carte connecté à l'ordinateur, l'utilisateur peut maintenant avoir la même expérience de transaction en ligne que s'il effectuait une transaction locale en magasin sans avoir besoin d'entrer son numéro de carte ou autre information requise par les marchands en ligne actuels.

Un avantage important de l'invention est que l'identité de l'acheteur et le mode de paiement sont uniquement connus par l'acheteur et la banque émettrice; L'unique information connue du portail de paiement et le marchand sont la banque émettrice et confirmation du montant de la transaction.

Le client peut utiliser un ou plusieurs modes de paiement dans la même transaction dans le cas notamment ou un compte est insuffisamment approvisionné.

D'autres particularités et avantages de l'invention apparaîtront à la lecture de la description, faite à titre d'exemple non limitatif et en regard des dessins annexés sur lesquels :
- La figure 1 illustre schématiquement la structure d'un objet portable conforme à l'invention;
- La figure 2 illustre schématiquement une utilisation de l'objet conforme à l'invention à l'aide d'un connecteur/lecteur;
- La figure 3 illustre schématiquement le réseau du site marchand pour utiliser l'invention selon un mode de mise en œuvre;

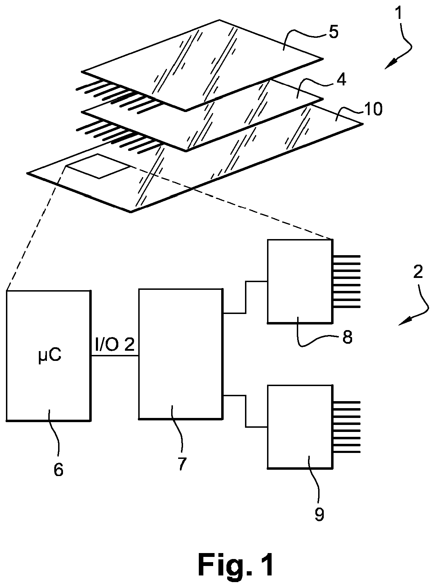

A la figure 1, l'objet portable servant à la description d'exemple de réalisation est une carte à puce 1 notamment au format ISO 7816; mais il pourrait être tout objet portable intelligent à microcircuit tel une clé USB ou carte à d'autres formats PCMCIA, MMC. Le microcircuit présente de préférence des fonctions de sécurité propres aux cartes à puce (protections physiques et/ou logiques, par exemple : clé de chiffrement, moyens anti intrusion, authentification, élaboration de certificat, génération de données aléatoires, brouillage de données,...); il est logé ici dans un module à contacts électriques 2 mais pourrait avoir des fonctions ou interface de communication autres telle une fonction sans contact notamment radiofréquence RFID selon la norme ISO 14443. L'objet portable est en principe destiné à communiquer avec un terminal de communication directement ou par l'intermédiaire d'un connecteur et/ou lecteur associé. Le microcircuit peut être dans une carte connecté à un objet ou soudé à un circuit électronique de l'objet

Dans la mesure où la couche OLED ou papier électronique pourrait être translucide notamment lorsqu'il n'y a pas du courant, les couches 4 et/ou 5 ou 10 pourraient comprendre des éléments de sécurité tels que des logos, des graphiques et hologrammes imprimés sous ces couches de manière conventionnelle pour renforcer la sécurité de la carte ou objet. Ces éléments de sécurité peuvent être réalisés par autre moyens tels que laser de personnalisation. Ainsi, la carte peut comprendre sur une face ou visible par transparence des couches tous les éléments nécessaires classiques de sécurisation graphique.

Dans une variante de réalisation, l'objet peut fonctionner en mode indépendant sur lui même sans communiquer avec le terminal; Notamment, il peut être amené à effectuer des fonctions de consultations d'une mémoire interne, ou génération de numéro OTP ou autres fonctions de saisie, sauvegarde ou comme une calculatrice.

Dans le cas d'une clé USB, la clé peut être enfichée dans un port de terminal de communication, PC, PDA, téléphone portable, etc. Dans l'exemple, la carte est reliée au terminal à l'aide d'un lecteur de carte ISO.

Le format carte à puce est préféré notamment pour des raisons de sécurité et portabilité de la carte et autres utilisations possibles parallèles: carte prépayée, fidélité, etc.

L'objet comporte ou est connecté à un afficheur 4 (écran) de préférence graphique mais pourrait simplement être de type alphanumérique.

Selon une caractéristique de l'invention, l'afficheur est interactif. L'interactivité de l'écran peut être obtenue par exemple par des capteurs de pression ou autre, capacitifs, résistifs, magnétiques placés derrière ou combinés à un écran, de préférence souple.

Dans l'exemple, on utilise de préférence un afficheur sensitif au toucher d'un doigt ou autre ustensile associé, pointe, stylo.

L'afficheur comprend dans l'exemple une couche d'afficheur 4 de type papier électronique (OLED) combinée à une couche sensible ou tactile 5.

L'afficheur s'étend de préférence sur une surface de l'ordre du 1/3 ou 1/2 de la surface de la carte sur une portion de surface et comporte une zone distante du module pour permettre une visibilité de la carte quand elle est insérée dans le connecteur.

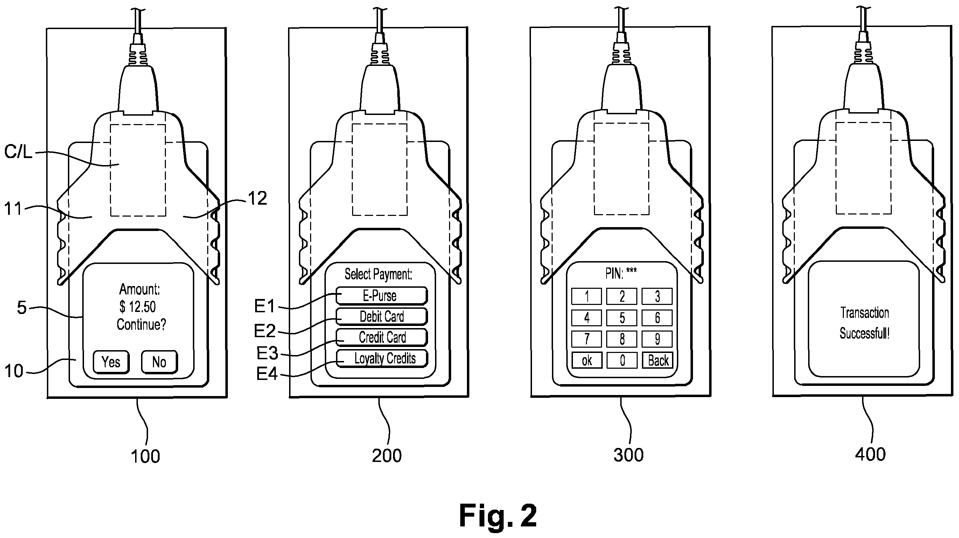

De manière avantageuse le connecteur C/L associé à la carte est agencé structurellement de manière à permettre une interaction de l'utilisateur avec l'afficheur interactif. Ici, le lecteur comporte des bras 11, 12 échancrés en "V" (figure 2). L'afficheur n'est donc pas couvert par le boitier du connecteur. Le lecteur est aussi agencé par rapport à la carte de manière à laisser l'afficheur interactif de la carte accessible et visible par l'utilisateur une fois placé en position de communication dans le lecteur.

Toutefois, l'afficheur pourrait couvrir la quasi totalité ou totalité de cette surface. Un connecteur éventuel à contacts électriques peut être localisé de préférence du même côté que l'afficheur mais pourrait être placé sur la face opposée pour gagner en surface.

L'objet est apte à interagir directement via l'écran avec un utilisateur.

Les deux couches sont reliées respectivement de manière connue à des moyens ou microcircuits électroniques 2 aptes à assurer les fonctions de présentation d'information à un utilisateur et à recevoir de manière interactive des interactions de l'utilisateur notamment par pression sur la couche tactile 5 .

Les moyens électroniques comprennent dans l'exemple un premier microcontrôleur 6 de carte à puce standard relié à au moins un second microcontrôleur 7 de l'écran sensitif et /ou de l'écran graphique par une connexion I/02 sur le second port série du microcontrôleur de la carte à puce, le premier port étant utilisé pour la communication via les contacts notamment ISO 7812-2). Le second microcontrôleur 7 pilote respectivement les deux couches par un décodeur d'adresse ou interface 8, 9.

Physiquement, on peut avoir une puce par microcontrôleur, connectées ensemble l'une sur l'autre et logées ensemble dans un module de carte à puce. Le cas échéant, l'ensemble des fonctions décrites ci-dessus peuvent être intégrés dans un seul composant ou réparties dans plusieurs composants positionnés et noyés dans le corps en plastique 10 de la carte à puce selon une technologie de carte à puce multi composants dans laquelle, les composants sont reliés par des pistes électriques réalisées sur un support souple notamment par gravure ou sérigraphie ou jet d'encre, etc.

De préférence, l'interaction avec l'utilisateur s'effectue directement ou indirectement entre l'écran et un composant de sécurité. Dans l'exemple, les données vont au composant de sécurité 6 via le contrôleur graphique et/ou tactile 7 qui peut aussi être sécurisé.

Les données vont directement dans un composant de sécurité ou passent le cas échéant par un composant de préférence également sécurisé. Il peut exister une procédure d'authentification mutuelle ou réciproque entre les deux composants, pour éviter par exemple une substitution de puce.

Dans une variante de mise en œuvre, la carte peut être une carte de type PCMCIA ou autre et comprendre une mémoire partagée accessible directement par une unité de traitement hôte et par un microcontrôleur de la carte. Les données à échanger avec l'hôte puis une unité distante, transitent par cette mémoire. Un fonctionnement comme celui du dispositif de communication entrée /sortie décrit dans le brevet EP0649547 peut être retenu pour mettre en œuvre l'invention, l'afficheur et l'écran pouvant être considérés comme interface d'entrée /sortie.

Les sélections sur l'écran sont perçues et décodées ou interprétées par le micro contrôleur 7. Par exemple, un code PIN tapé éventuellement selon une logique connue de l'utilisateur et partagée par le microcontrôleur 7 est déduit par le microcontrôleur. Le microcontrôleur 7 transpose éventuellement les signaux perçus en données représentant le code PIN.

Ces données sont ensuite comparées soit dans le même composant sécurisé ou transmis à un autre composant sécurisé 6 pour comparaison ou transmission à un dispositif externe (serveur bancaire) pour comparaison avec un code PIN pré enregistré.

Les données représentant le code PIN sont communiquées au composant 7, le cas échéant, en mettant en œuvre un mécanisme de sécurité (chiffrement, ...)

Pour son fonctionnement l'objet portable comprend des fonctions et/ou moyens décrits ci-dessous de manière cumulative ou isolée.

Selon une autre caractéristique, l'objet portable comprend des moyens de communication aptes à établir une communication avec une unité de traitement distante et/ou afficher des informations provenant de l'unité de traitement distante. La carte comprend notamment des moyens permettant d'établir une communication sur internet directement ou indirectement via le terminal. Dans l'exemple, le protocole IP internet y est intégré et on dispose d'une communication directe sur internet par l'intermédiaire du terminal, ce dernier devenant transparent et intervenant comme un modem en réalisant juste l'interface de communication physique entre le réseau et la carte

Selon une caractéristique, la carte est apte à faire transiter les données saisies sur l'écran à l'unité distante; En particulier, les données saisies sont interprétées et/ou décodées par le contrôleur second avec son décodeur et transmises au contrôleur premier pour être véhiculées sur internet à une unité distante qui peut être un serveur d'un site marchand. Un programme d'interprétation P2 et un programme de transfert P3 des données saisies sont présents dans le second microcontrôleur 7 ou répartis entre les deux 7, 8.

Selon d'autres caractéristiques, la carte comprend un programme ou protocole P4 permettant d'afficher des données d'une transaction en provenance de l'unité distante pour approbation et/ ou contrôle par interaction sur une zone affiché sur l'écran.

Selon d'autres caractéristiques, la carte comprend un programme ou protocole P5 permettant d'afficher au moins un mode de paiement et de transmettre un mode sélectionné par interaction sur une zone affichée sur l'écran.

Elle comprend un programme PIN P6 permettant d'afficher au moins un clavier interactif de saisie d'un code PIN et de transmettre pour vérification le code PIN sélectionné par interaction avec les zones affichées sur l'écran.

La vérification peut s'effectuer de préférence par un serveur distant officiel (banque, ...) mais peut s'effectuer dans la carte de manière plus classique; Dans ce dernier cas, le terminal reçoit la réponse de la carte ou un certificat permettant de réaliser la transaction. De préférence, la carte valide le PIN elle-même pour une pré-validation avant de transmettre à la banque. Il est à noter qu'un logiciel de traitement de changement de PIN avec synchronisation avec la banque est également envisageable en option.

La carte comprend un programme P7 de saisie biométrique telle une écriture, une signature. La signature peut être réalisée sur l'écran tactile avec un stylet; En particulier, le programme est apte à faire afficher au moins une zone d'écriture sur l'écran et de transmettre pour vérification des paramètres de saisie de l'écriture par interaction avec l'écran. La carte peut également à cet effet comprendre des moyens d'analyse et diagnostic des données saisies, par exemple une comparaison ou calcul de la dynamique de la signature. Le cas échéant, un capteur biométrique et/ou d'empreinte peut être associé à la surface de la carte ou à côté de l'écran tactile; ces données peuvent venir compléter une saisie de PIN code ou constituer les données à vérifier pour la transaction. La carte peut comprendre un programme de reconnaissance statique d'une signature et/ou écriture dynamique d'une signature sur un écran sensitif.

Une utilisation de l'objet conforme à l'invention est décrite maintenant en relation avec la figure 2 qui illustre le procédé et/ou système pour réaliser une transaction électronique comprenant un échange de données entre une unité de traitement distante connectée à un objet portable.

Le procédé met en œuvre une étape d'affichage pour présenter tout ou partie d'informations utiles à la transaction à un utilisateur et/ou une étape d'interaction et/ou validation de l'utilisateur. Bien que préférable d'effectuer ces opérations à l'aide de l'afficheur interactif de l'invention, l'invention permet d'utiliser cet afficheur interactif pour réaliser tout ou partie d'au moins l'étape d'affichage ou d'au moins celle de l'interaction sécurisée. Ainsi par exemple, la confirmation du montant et/ou la sélection du mode pourrait être toujours effectuée sur un autre clavier que celui de la carte. Les différentes étapes et interactions pourraient être réparties entre la carte et le système (écran PC, clavier PC ou clavier du et afficheur du terminal POS).

Pour réaliser une transaction sur internet, l'utilisateur se connecte à un réseau de communication tel internet avec son ordinateur PC et sélectionne sur un site marchand un produit ou service à acheter. Le PC comprend une interface carte à puce réalisée ici par un connecteur ou lecteur C/L. Le connecteur peut être relié aussi par un câble USB au PC et la communication et fonction USB peuvent être réalisées soit par la carte elle-même, soit par une fonction d'adaptation ISO/USB du lecteur.

Au cours de la transaction ou avant, l'utilisateur introduit sa carte dans un connecteur adapté relié au terminal et les données et opérations nécessaires à la transaction sont alors réalisées entre la carte et le réseau. L'utilisateur peut être invité à introduire sa carte par un message émis ou véhiculé du site marchand et affiché à l'écran du PC comme si il était notamment à une caisse de supermarché.

L'utilisateur introduit sa carte qui est alors détectée par le PC et la communication peut être basculée directement entre la carte et le réseau via les connexions du terminal. Dans le cas contraire, la communication peut s'effectuer via le PC comme interface logique et physique qui relaye les communications à la carte.

Le portail de paiement a fait préalablement une requête à la banque du client qui établit ensuite une communication avec la carte pour effectuer une transaction sécurisée comme si la carte était dans un lecteur de paiement portable POS.

On parvient alors dans le cadre d'une communication sécurisée C5 dont l'établissement est décrit ultérieurement, entre la carte et la banque émettrice du client.

Ensuite, le paiement en lui même est effectué de la manière suivante :
- A l'étape 100 le site marchand ayant communiqué à la banque (notamment à travers une requête de paiement à un portail de paiement 16 expliqué ci-dessous) les données de la transaction à la carte, par exemple un montant de $ 12.50, la banque fait afficher le montant de la transaction par une commande d'affichage destinée à la carte et comportant le montant à afficher comme donnée liée à la commande.

Les questions "continuer" et deux réponses "oui", "non" à l'intérieur ou en regard de deux fenêtres distinctes interactives de l'afficheur sensitif sont également affichées soit à l'initiative de la banque par une commande équivalente à la précédente soit à l'initiative de la carte qui comprend un programme apte à afficher ces questions déclenchées par la réception de la commande précédente.

A l'étape 200, l'utilisateur ayant sélectionné "oui", un signal correspondant est capté par le contrôleur de la carte et retourné à la banque;
La banque fait ensuite afficher ou véhiculer à destination de la carte, un menu de sélection du mode de paiement comprenant par exemple : par carte porte monnaie électronique, carte de débit, carte de crédit, ou carte de crédit de points de fidélité. Ces options sont affichées dans des zones interactives respectivement E1, E2, E3, E4 de la couche interactive en regard de l'afficheur.

Alternativement, l'initiative peut provenir de la carte qui comprend au préalable une liste des possibilités de paiement offerte à l'utilisateur et qui déclenche elle-même grâce à un programme applicatif approprié exécuté par le microcontrôleur de la carte en réponse à la sélection de la réponse "oui".

Une fois sélectionnée, la zone points de fidélité est détectée par le site marchand qui renvoie un clavier de saisie de PIN code avec des touches interactives. Le clavier est de préférence brouillé ou chiffré et déchiffré dans la carte.

Alternativement, l'initiative de l'affichage d'un code PIN peut provenir de la carte en vertu d'un programme qui fait afficher un code PIN, éventuellement modifié à chaque affichage selon une séquence connue de l'utilisateur. L'affichage est déclenché en réponse à la sélection précédente du mode de paiement capté par la carte.

Des étoiles s'affichent sur l'écran à chaque saisie de numéro et une validation sur "OK" déclenche l'envoi du code PIN sur le réseau à destination de la banque, ceci étant effectué de préférence sous forme chiffrée grâce à des clés de chiffrement préalablement chargées ou générées et algorithmes de chiffrement et/ou vérification de certificat de la carte.

Alternativement, la carte reçoit elle-même le code PIN et le vérifie elle-même, puis communique un résultat positif de la vérification de préférence sous forme chiffrée à la banque ou avec un certificat associé.

A l'étape 400, la banque du client a vérifié le PIN reçu qu'elle a, le cas échéant, déchiffré au préalable et fait afficher une information indiquant le succès de la transaction à destination de la carte également sous forme de commande d'affichage et la banque procède ensuite au paiement.

Alternativement, la carte a vérifié le code PIN en interne et communique sous forme chiffrée de préférence le résultat positif de la comparaison du code PIN tapé à la banque qui déchiffre en local et procède au paiement.

Ensuite, des messages de confirmation de paiement interviennent entre la banque et le portail de paiement (voir liaison C6, C7) qui en informe le serveur marchand et un transfert de fond et finalisation de la transaction intervient de la banque du client à celle du marchand.

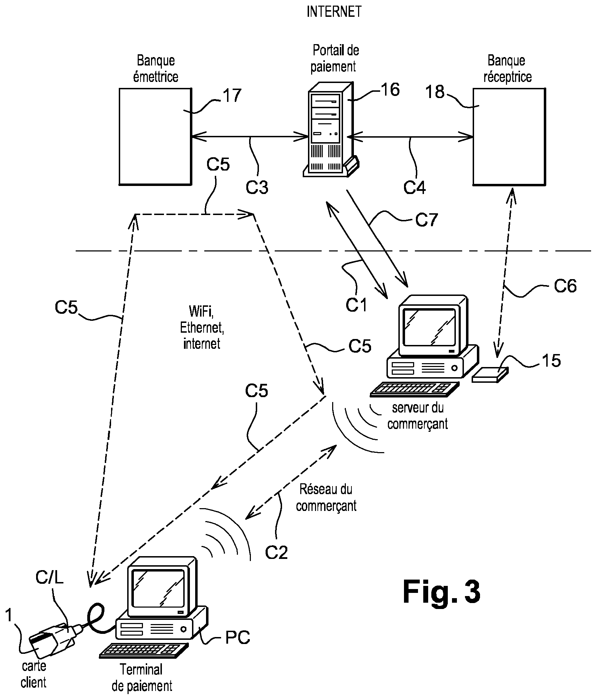

La figure 3 illustre schématiquement le réseau du site marchand pour utiliser l'invention selon un mode de mise en œuvre.

Par simplification, le portail de paiement intervient aussi comme autorité de certification;
Pour les transactions en ligne, le terminal de paiement peut être un PC connecté via une connexion internet;
Dans le cas de remboursement, le serveur de la banque émettrice et le serveur de la banque débitrice sont permutés;

Le système de l'invention comprend le terminal PC relié à la carte pour se connecter à une unité de traitement distante 15, 16 telle un serveur marchand 15 via un réseau quelconque tel Wifi, Ethernet, internet 15, 17 et/ou une banque émettrice de l'utilisateur 17. Ces unités 15, 17 sont aptes à mettre en œuvre un protocole de communication et/ou jeu de commandes avec l'objet portable permettant l'affichage et/ou une récupération des données saisies à l'écran directement et/ou après traitement et/ou vérification par l'objet portable.

Le serveur marchand 15 est en relation de communication avec une banque réceptrice 18 d'une part et un portail de paiement 16 d'autre part. Le portail de paiement 16 est en relation avec la banque du client 17 et celle 18 du marchand.

Les étapes sont les suivantes :
C1 : Une communication sécurisée C1 telle que du type TSL/SSL est établie entre le serveur marchand 15 et le portail de paiement 16;
C2: Le montant de la transaction, l'identité du serveur, l'identité de la banque émettrice et identité du serveur de la banque réceptrice sont chiffrés et transmis C2 au portail de paiement 16 en utilisant la clé publique du portail de paiement.
C3: Une communication sécurisée C3 telle que du type TSL/SSL est établie entre le portail de paiement 16 et le serveur marchand de la banque émettrice 17;
C4 : Une communication sécurisée C4 telle que du type TSL/SSL est également établie entre serveur marchand 15 et le serveur de la banque réceptrice 18;
C5 : Une liaison sécurisée C5 est établie entre la banque émettrice et la carte (voir plus loin pour détail), confirmation de retrait retourné au portail de paiement via le portail de paiement et serveur marchand ou directement via le PC.
C6 : Une liaison sécurisée C6 est établie entre la banque réceptrice et la carte du marchand, confirmation de dépôt retournée au portail de paiement 16.
C7- Un numéro de confirmation de transaction est retourné au marchand (et par conséquent aussi à la carte du client).

Les éléments ci-après doivent de préférence être injectés selon un exemple de mise en œuvre, dans la carte client au cours d'une personnalisation (ou lors de l'émission de la carte) pour sécuriser la transaction notamment entre la banque émettrice et la carte du client.
IDcc = identifiant de la carte client
CERTca = CA certificat
CERTcc = Certificat de la carte client (Date d'expiration) avec Pukcc = clé publique de la carte client
PrKcc = parties de clé privée de la carte client (P, Q, PQ, Exposant DP et exposant DQ)
Skcc = Clé secrète de la carte client partagée avec la banque émettrice.

La banque (ou serveur équivalent) de son côté comprend également des moyens pour chiffrer les données émises vers la carte et déchiffrer les données reçues de la carte.

La banque (ou serveur équivalent) comprend également des moyens pour élaborer un certificat à destination de la carte ou vérifier un certificat reçu de la carte.

Selon d'autres caractéristiques alternatives ou complémentaires, une fois la liaison sécurisée établie entre la carte et la banque émettrice de la carte, celle-ci peut proposer via l'interface affichable de la carte, les différents types de paiement disponibles.

La carte peut communiquer directement avec la banque de manière interactive. Pour cela, un jeu de commande et/ou protocole sont partagé(s) entre la carte et la banque. Des messages de la banque à la carte sont transmis directement et inversement, le cas échéant encapsulés dans un protocole de communication du réseau.

La carte comprend le cas échéant un autre protocole et jeu de commandes propres à la banque émettrice qui est déclenchée une fois la communication établie entre la carte et la banque. Le lecteur est apte à encapsuler/des encapsuler les commandes et données provenant de la carte et inversement.

Les menus et les types de transactions sont véhiculés de manière interactive de la banque vers la carte. En d'autres mots, les types de paiement disponibles en concordance avec le profil du client (ex: compte bancaire 1, compte bancaire 2, compte de crédit 1, marge de crédit...) sont offerts ou proposés directement par la banque avec les montants (balance) disponibles sur ces comptes (ex : compte bancaire 1 à 2000 €, compte bancaire 2 à 1500 €, balance du compte de crédit 1 à 500 €...); L'invention permet d'effectuer un paiement réparti sur plusieurs comptes selon le crédit disponible sur chaque compte ou au choix du client.

## Revendications

1. Objet portable intelligent comportant un circuit électronique, un composant de sécurité (6) soudé ou connecté au circuit électronique, un écran (4, 5),
ledit objet étant configuré pour réaliser une transaction électronique avec une unité distante via l'écran, ladite transaction comprenant un échange bidirectionnel de données / informations entre l'objet et l'unité distante, ledit composant de sécurité (6, 7) étant configuré pour recevoir, décoder ou interpréter ou sécuriser tout ou partie desdites données / informations,
**caractérisé en ce que** ledit écran est tactile ou sensitif, ledit composant de sécurité (6) est configuré pour recevoir ou décoder ou interpréter ou sécuriser tout ou partie desdites données / informations durant ladite transaction, lesdites informations / données étant saisies directement sur ledit écran tactile ou sensitif.

2. Objet portable selon la revendication précédente, **caractérisé en ce qu'**il est comprend ou constitue une carte, un téléphone portable, un assistant personnel (PDA).

3. Objet portable selon l'une des revendications précédentes, **caractérisé en ce que** l'objet est configuré pour mettre en œuvre un protocole de communication et/ou jeu de commandes partagé(s) avec une l'unité distante afin de communiquer directement avec elle.

4. Objet portable selon l'une des revendications 1 à 3, **caractérisé en ce qu'**il comprend une interface de communication avec un terminal (PC).

5. Objet portable selon l'une quelconque des revendications précédentes, **caractérisé en ce qu'**il comprend des moyens de communication physiques et/ou programmes (P2, P3) aptes à établir une communication avec une unité de traitement distante (15, 16, 17) et/ou afficher des informations provenant de l'unité de traitement distante.

6. Objet portable selon l'une quelconque des revendications précédentes, **caractérisé en ce qu'**il comprend un capteur biométrique et/ou d'empreinte pour constituer les données / informations à vérifier pour la transaction.

7. Objet portable selon l'une quelconque des revendications précédentes, **caractérisé en ce que** lesdites données / informations comprennent un code PIN ou des données représentatives du code PIN ou une information biométrique.

8. Objet portable selon l'une quelconque des revendications précédentes, **caractérisé en ce qu'**il comprend un programme ou protocole (P4) permettant d'afficher des données / informations d'une transaction en provenance de l'unité distante pour approbation et/ ou contrôle de l'utilisateur par interaction sur une zone affichée sur l'écran.

9. Objet portable selon l'une quelconque des revendications précédentes, **caractérisé en ce qu'**il comprend un programme ou protocole (P5) permettant d'afficher au moins un mode de paiement et de transmettre un mode sélectionné par interaction de l'utilisateur sur une zone affichée sur l'écran.

10. Objet portable selon l'une quelconque des revendications précédentes, **caractérisé en ce qu'**il comprend un programme (P6) permettant d'afficher au moins un clavier interactif de saisie d'un code PIN et de transmettre pour vérification le code PIN sélectionné par interaction de l'utilisateur avec les zones affichées sur l'écran.

11. Objet portable selon l'une quelconque des revendications précédentes, **caractérisé en ce qu'**il comprend un programme de saisie biométrique ou de reconnaissance de caractère statique et/ou dynamique (P7) capable d'afficher au moins une zone d'écriture et de transmettre pour vérification des paramètres de saisie de l'écriture par interaction de l'utilisateur avec l'écran.

12. Objet portable selon l'une des revendications précédentes, **caractérisé en ce que** le composant est configuré pour mettre en œuvre un certificat CA et algorithme(s) de vérification ou d'élaboration de certificat CA pour sécuriser la transaction.

13. Objet portable selon l'une des revendications précédentes, **caractérisé en ce que** le composant est configuré pour avoir une liaison sécurisée (C5) directement avec l'unité distante.

14. Objet portable selon l'une des revendications précédentes, **caractérisé en ce que** ledit composant de sécurité (6, 7) comprend un contrôleur graphique sécurisé (7) et/ou une puce (6) comprenant un contrôleur sécurisé et/ou une puce mettant en œuvre des opérations de sécurité.

15. Objet portable selon l'une des revendications précédentes, **caractérisé en ce qu'**il comprend un protocole IP internet permettant d'établir une communication sur internet directement ou indirectement via un terminal.

16. Procédé pour réaliser une transaction électronique comprenant un échange de données / informations entre une unité de traitement distante (15, 16, 17) et un objet portable (1) comprenant un composant de sécurité et un écran, ledit procédé mettant en oeuvre :
- une étape d'affichage pour présenter tout ou partie d'informations utiles à la transaction à un utilisateur,
**caractérisé en ce que** ledit écran est tactile ou sensitif, et **en ce que** le procédé met en œuvre :
- une étape de saisies desdites informations / données directement sur ledit écran tactile ou sensitif, et
- une étape dans laquelle ledit composant de sécurité reçoit, décode, interprète ou sécurise tout ou partie desdites données / informations.

17. Système pour réaliser une transaction électronique comprenant un échange de données / informations bidirectionnel entre une unité de traitement distante et un objet portable, ledit système comportant :
- des moyens d'affichage pour présenter tout ou partie d'informations utiles à la transaction à un utilisateur
- et/ou des moyens d'interaction avec l'utilisateur,
**caractérisé en ce que** l'objet portable utilisé est conforme à l'une des revendications 1 à 15.

18. Système selon la revendication précédente, **caractérisé en ce qu'**il comprend une unité de traitement distante apte à mettre en œuvre un protocole de communication et/ou jeu de commandes avec l'objet portable permettant l'affichage et/ou une récupération des données / informations saisies à l'écran directement ou après traitement ou vérification par l'objet portable.

19. Système selon l'une des revendications 17 ou 18, caractérisé en ce ledit objet est une carte et en ce que ledit système comprend un lecteur de carte qui est agencée par rapport à la carte de manière à laisser l'afficheur interactif accessible et visible par l'utilisateur une fois placée en position de communication dans le lecteur.

## Patentansprüche

1. Intelligenter tragbarer Gegenstand, der eine elektronische Schaltung, ein Sicherheitsbauelement (6), das an die elektronische Schaltung gelötet oder angeschlossen ist, einen Bildschirm (4, 5) umfasst,
wobei der Gegenstand konfiguriert ist, um eine elektronische Transaktion mit einer entfernten Einheit mittels des Bildschirms durchzuführen, wobei die Transaktion einen bidirektionalen Austausch von Daten/Informationen zwischen dem Gegenstand und der entfernten Einheit umfasst, wobei das Sicherheitsbauelement (6, 7) konfiguriert ist, um alle oder einen Teil der Daten/Informationen zu empfangen, zu decodieren oder zu interpretieren oder zu sichern,
**dadurch gekennzeichnet, dass** der Bildschirm berührungsempfindlich oder sensitiv ist, das Sicherheitsbauelement (6) konfiguriert ist, um alle oder einen Teil der Daten/Informationen während der Transaktion zu empfangen oder zu decodieren oder zu interpretieren oder zu sichern, wobei die Informationen/Daten direkt auf dem berührungsempfindlichen oder sensitiven Bildschirm eingegeben werden.

2. Tragbarer Gegenstand nach dem vorstehenden Anspruch, **dadurch gekennzeichnet, dass** er eine Karte, ein Mobiltelefon, einen persönlichen Assistenten (PDA) umfasst oder bildet.

3. Tragbarer Gegenstand nach einem der vorstehenden Ansprüche, **dadurch gekennzeichnet, dass** der Gegenstand konfiguriert ist, um ein Kommunikationsprotokoll und/oder einen Satz von Befehlen umzusetzen, die mit einer entfernten Einheit gemeinsam genutzt wird (werden), um direkt mit ihr zu kommunizieren.

4. Tragbarer Gegenstand nach einem der Ansprüche 1 bis 3, **dadurch gekennzeichnet, dass** er eine Kommunikationsschnittstelle mit einem Endgerät (PC) umfasst.

5. Tragbarer Gegenstand nach einem der vorstehenden Ansprüche, **dadurch gekennzeichnet, dass** er physische Kommunikationsmittel und/oder Programme (P2, P3) umfasst, die geeignet sind, eine Kommunikation mit einer entfernten Verarbeitungseinheit (15, 16, 17) aufzubauen und/oder Informationen, die von der entfernten Verarbeitungseinheit kommen, anzuzeigen.

6. Tragbarer Gegenstand nach einem der vorstehenden Ansprüche, **dadurch gekennzeichnet, dass** er einen biometrischen und/oder Fingerabdrucksensor umfasst, um die für die Transaktion zu überprüfenden Daten/Informationen zu bilden.

7. Tragbarer Gegenstand nach einem der vorstehenden Ansprüche, **dadurch gekennzeichnet, dass** die Daten/Informationen einen PIN-Code oder für den PIN-Code repräsentative Daten oder biometrische Informationen umfassen.

8. Tragbarer Gegenstand nach einem der vorstehenden Ansprüche, **dadurch gekennzeichnet, dass** er ein Programm oder Protokoll (P4) umfasst, das es erlaubt, Daten/Informationen einer Transaktion, die von der entfernten Einheit kommen, zur Genehmigung und/oder Kontrolle des Benutzers durch Interaktion auf einer auf dem Bildschirm angezeigten Zone anzuzeigen.

9. Tragbarer Gegenstand nach einem der vorhergehenden Ansprüche, **dadurch gekennzeichnet, dass** er ein Programm oder Protokoll (P5) umfasst, das es erlaubt, mindestens einen Zahlungsmodus anzuzeigen und einen durch Interaktion des Benutzers ausgewählten Modus auf einer auf dem Bildschirm angezeigten Zone zu übertragen.

10. Tragbarer Gegenstand nach einem der vorstehenden Ansprüche, **dadurch gekennzeichnet, dass** er ein Programm (P6) umfasst, das es erlaubt, mindestens eine interaktive Tastatur zur Eingabe eines PIN-Codes anzuzeigen und den PIN-Code, der durch Interaktion des Benutzers mit den auf dem Bildschirm angezeigten Zonen ausgewählt wird, zur Überprüfung zu übertragen.

11. Tragbarer Gegenstand nach einem der vorstehenden Ansprüche, **dadurch gekennzeichnet, dass** er ein Programm zur biometrischen Eingabe oder zur statischen und/oder dynamischen Zeichenerkennung (P7) umfasst, das in der Lage ist, mindestens eine Schreibzone anzuzeigen und Parameter der Schreibeingabe durch Interaktion des Benutzers mit dem Bildschirm zur Überprüfung zu übertragen.

12. Tragbarer Gegenstand nach einem der vorstehenden Ansprüche, **dadurch gekennzeichnet, dass** das Bauelement konfiguriert ist, um ein CA-Zertifikat und Algorithmus (Algorithmen) zur Überprüfung oder Erstellung eines CA-Zertifikats umzusetzen, um die Transaktion zu sichern.

13. Tragbarer Gegenstand nach einem der vorstehenden Ansprüche, **dadurch gekennzeichnet, dass** das Bauelement konfiguriert ist, um eine sichere Verbindung (C5) direkt mit der entfernten Einheit aufzuweisen.

14. Tragbarer Gegenstand nach einem der vorstehenden Ansprüche, **dadurch gekennzeichnet, dass** das Sicherheitsbauelement (6, 7) einen sicheren Grafikcontroller (7) und/oder einen Chip (6) umfasst, der einen sicheren Controller und/oder einen Chip umfasst, der Sicherheitsvorgänge umsetzt.

15. Tragbarer Gegenstand nach einem der vorstehenden Ansprüche, **dadurch gekennzeichnet, dass** er ein Internet-IP-Protokoll umfasst, das es erlaubt, direkt oder indirekt über ein Endgerät eine Kommunikation im Internet aufzubauen.

16. Verfahren zum Durchführen einer elektronischen Transaktion, das einen Austausch von Daten/Informationen zwischen einer entfernten Verarbeitungseinheit (15, 16, 17) und einem tragbaren Gegenstand (1) umfasst, der ein Sicherheitsbauelement und einen Bildschirm umfasst, wobei das Verfahren umsetzt:
- einen Anzeigeschritt, um einem Benutzer alle oder einen Teil der für die Transaktion nützlichen Informationen zu präsentieren,
**dadurch gekennzeichnet, dass** der Bildschirm berührungsempfindlich oder sensitiv ist, und dass das Verfahren umsetzt:
- einen Schritt des Eingebens der Informationen/Daten direkt auf dem berührungsempfindlichen oder sensitiven Bildschirm, und
- einen Schritt, bei dem das Sicherheitsbauelement alle oder einen Teil der Daten/Informationen empfängt, decodiert, interpretiert oder sichert.

17. System zum Durchführen einer elektronischen Transaktion, das einen bidirektionalen Daten-/lnformationsaustausch zwischen einer entfernten Verarbeitungseinheit und einem tragbaren Gegenstand umfasst, wobei das System umfasst:
- Anzeigemittel zum Präsentieren aller oder eines Teils von Informationen, die für die Transaktion für einen Benutzer nützlich sind,
- und/oder Mittel zur Interaktion mit dem Benutzer,
**dadurch gekennzeichnet, dass** der verwendete tragbare Gegenstand einem der Ansprüche 1 bis 15 entspricht.

18. System nach dem vorstehenden Anspruch, **dadurch gekennzeichnet, dass** es eine entfernte Verarbeitungseinheit umfasst, die geeignet ist, ein Kommunikationsprotokoll und/oder einen Satz von Befehlen mit dem tragbaren Gegenstand umzusetzen, die die Anzeige und/oder den Abruf von auf dem Bildschirm eingegebenen Daten/Informationen direkt oder nach Verarbeitung oder Überprüfung durch den tragbaren Gegenstand erlauben.

19. System nach einem der Ansprüche 17 oder 18, **dadurch gekennzeichnet, dass** der Gegenstand eine Karte ist, und dass das System einen Kartenlesevorrichtung umfasst, die in Bezug auf die Karte derart eingerichtet ist, dass das interaktive Display für den Benutzer zugänglich und sichtbar bleibt, sobald sie in der Kommunikationsposition in der Lesevorrichtung platziert ist.

## Claims

1. Smart portable object comprising an electronic circuit, a safety component (6) soldered or connected to the electronic circuit, a screen (4, 5),
said object being configured to perform an electronic transaction with a remote unit via the screen, said transaction comprising a bidirectional exchange of data/information between the object and the remote unit, said security component (6, 7) being configured to receive, decode or interpret or secure all or part of said data/information,
**characterised in that** said screen is a touch screen or a touch-sensitive screen, said security component (6) is configured to receive or decode or interpret or secure all or part of said data/information during said transaction, said information/data being entered directly on said touch screen or touch-sensitive screen.

2. Portable object according to the preceding claim, **characterised in that** it comprises or constitutes a card, a mobile phone, a personal digital assistant (PDA).

3. Portable object according to one of the preceding claims, **characterised in that** the object is configured to implement a communication protocol and/or set of commands shared with a remote unit in order to communicate directly with it.

4. Portable object according to one of claims 1 to 3, **characterised in that** it comprises a communication interface with a terminal (PC).

5. Portable object according to any one of the preceding claims, **characterised in that** it comprises physical communication means and/or programs (P2, P3) capable of establishing communication with a remote processing unit (15, 16, 17) and/or displaying information from the remote processing unit.

6. Portable object according to any one of the preceding claims, **characterised in that** it comprises a biometric and/or fingerprint sensor to capture the data/information to be verified for the transaction.

7. Portable object according to any one of the preceding claims, **characterised in that** said data/information comprises a PIN code or representative data for the PIN code or biometric information.

8. Portable object according to any one of the preceding claims, **characterised in that** it comprises a program or protocol (P4) making it possible to display data/information of a transaction coming from the remote unit for approval and/or verification by the user by interacting on an area displayed on the screen.

9. Portable object according to any one of the preceding claims, **characterised in that** it comprises a program or protocol (P5) making it possible to display at least one payment method and to transmit a mode selected by user interaction on an area displayed on the screen.

10. Portable object according to any one of the preceding claims, **characterised in that** it comprises a program (P6) making it possible to display at least one interactive keyboard for entering a PIN code and to transmit for verification the PIN code selected by user interaction with the fields displayed on the screen.

11. Portable object according to any one of the preceding claims, **characterised in that** it comprises a biometric input or static and/or dynamic character recognition program (P7) capable of displaying at least one writing area and of transmitting for verification the parameters of the writing entered by user interaction with the screen.

12. Portable object according to one of the preceding claims, **characterised in that** the component is configured to implement a CA certificate and algorithm(s) for verifying or developing a CA certificate to secure the transaction.

13. Portable object according to one of the preceding claims, **characterised in that** the component is configured to establish a secure connection (C5) directly with the remote unit.

14. Portable object according to one of the preceding claims, **characterised in that** said security component (6, 7) comprises a secure graphics controller (7) and/or a chip (6) comprising a secure controller and/or a chip implementing security operations.

15. Portable object according to one of the preceding claims, **characterised in that** it comprises an IP internet protocol that allows it to establish a communication over the internet directly or indirectly via a terminal.

16. Method for carrying out an electronic transaction comprising an exchange of data/information between a remote processing unit (15, 16, 17) and a portable object (1) comprising a security component and a screen, said method implementing:
- a display step to present all or part of the information related to the transaction to a user,
**characterised in that** said screen is a touch screen or touch-sensitive screen, and **in that** the method implements:
- a step of entering said information/data directly on said touch-sensitive screen, and
- a step in which said security component receives, decodes, interprets or secures all or part of said data/information.

17. System for carrying out an electronic transaction comprising a two-way data/information exchange between a remote processing unit and a portable object, said system comprising:
- display means for presenting all or part of the information related to the transaction to a user
- and/or means of interaction with the user,
**characterised in that** the portable object used complies with one of claims 1 to 15.

18. System according to the preceding claim, **characterised in that** it comprises a remote processing unit capable of implementing a communication protocol and/or set of commands with the portable object allowing the display and/or retrieval of data/information entered on the screen directly or after processing or verification by the portable object.

19. System according to one of claims 17 or 18, **characterised in that** said object is a card and **in that** said system comprises a card reader arranged with respect to the card so as to leave the interactive display accessible and visible to the user once placed in the communication position in the reader.
